# EUROPÄISCHE PATENTSCHRIFT

(11) **EP 2 832 242 B1**
(45) Veröffentlichungstag und Bekanntmachung des Hinweises auf die Patenterteilung: **24.02.2021**
(21) Anmeldenummer: 14179209.3
(22) Anmeldetag: 30.07.2014
(51) Int. Cl.: A23L 3/36, A21D 15/02, F28B 3/06, F25D 31/00

(54) **VERFAHREN ZUR REGELUNG EINER VAKUUMKÜHLVORRICHTUNG**
METHOD FOR CONTROLLING A VACUUM COOLING DEVICE
PROCÉDÉ DE RÉGLAGE D'UN DISPOSITIF DE REFROIDISSEMENT SOUS VIDE

(30) Priorität: 01.08.2013 EP 13178985
(43) Veröffentlichungstag der Anmeldung: 04.02.2015
(73) Patentinhaber: Glavatec AG, 8753 Mollis (CH)
(72) Erfinder: Giger, Ulrich, 8608 Bubikon (CH); Bäbler, Florian, 8753 Mollis (CH); Bäbler, Kaspar, 8753 Mollis (CH)
(74) Vertreter: Herrmann, Johanna

(56) Entgegenhaltungen:
- EP-A1- 2 177 851
- WO-A1-97/32113
- DE-A1- 2 507 003
- DE-A1- 10 255 792
- DE-B- 1 017 593
- JP-A- H04 281 178
- JP-A- H10 117 751
- JP-A- H10 122 717
- JP-A- H11 211 314
- JP-A- 2001 221 546
- JP-A- 2003 235 530
- JP-A- 2007 192 459
- JP-A- 2010 181 042

## Beschreibung

Die Erfindung betrifft ein Verfahren für die Regelung der Kühlung für eine Vakuumkühlvorrichtung für Lebensmittel, insbesondere Backwaren. Die Erfindung betrifft insbesondere eine Vakuumkühlvorrichtung für Lebensmittel, beispielsweise Backwaren, welche zur Kondensation eines Dampfes, insbesondere von Wasserdampf, geeignet ist. Eine Vakuumkühlanlage zum Kühlen von Lebensmitteln, unter einem negativen Druck umfasst eine Vakuumkammer, die zur Aufnahme des frischen Lebensmittels für dessen Kühlung ausgebildet ist; eine Vakuumquelle, wie beispielsweise eine Vakuumpumpe, die mit der Vakuumkammer zum Ausstoßen von Dampf aus der Vakuumkammer und zur Erzeugung eines Unterdrucks in der Vakuumkammer verbunden ist sowie einen Dampfkondensator.

Heisse und feuchte Lebensmittel können durch Evakuieren in einer Vakuumkammer sehr effizient abgekühlt werden, das heisst es ist nur eine kurze Abkühlungsdauer erforderlich. Allerdings fallen während des Evakuiervorgangs sehr grosse Volumina an Dampf an, welche ein Vielfaches des Kammervolumens betragen können. In einer Vakuumkammer, welche zwischen 4 und 6.6 m³ Kammervolumen aufweist, kann das Dampfvolumen beispielsweise bis100 x des Kammervolumens betragen. Die Leistung der Vakuumpumpe wird durch das anfallende Dampfvolumen bestimmt. Das heisst die Vakuumpumpe muss derart ausgelegt werden, dass die gesamte Dampfmenge die Vakuumkammer über die Vakuumpumpe verlässt. Um die Dampfmenge, welche die Vakuumpumpe verarbeiten muss, zu vermindern, werden in die Vakuumleitungen Dampfkondensatoren eingebaut. Diese Dampfkondensatoren verhindern zwar, dass ein Teil des Dampfes die nachgeschaltete Vakuumpumpe erreicht, allerdings muss die Vakuumpumpe den gesamten nicht kondensierten Dampfvolumenstrom aus dem Vakuumbehälter umwälzen.

Die DE 2902270 bezieht sich auf ein Verfahren zum Abkühlen von Backgut mittels Druckerniedrigung in einer Kühlkammer. Hierbei wird Dampf aus der Kühlkammer mittels einer Vakuumpumpe abgesaugt. Die Regelung erfolgt derart, dass der Druck bis zu einem vorgegebenen Sollwert erniedrigt wird und dann in einer zweiten Druckerniedrigungsphase bis zum nächst niedrigeren Sollwert abgesaugt wird, wenn der gemessene Druck während eines vorgegebenen Zeitintervalls Δt den Sollwert um nicht mehr als einen vorgegebenen Wert Δp übersteigt.

Ofenheisses Backgut kann mit diesem Verfahren innerhalb weniger Minuten auf Umgebungstemperatur abgekühlt werden, sodass es schnittfest ist und beim Verpacken in Kunststoffbeuteln kein Kondensat mehr bildet.

Die in der DE 2902270 vorgeschlagene Lösung bewirkt keine Änderung in dem Leistungsbedarf der Vakuumpumpe, sie erlaubt allein eine präzisere Regelung des Vakuumkühlvorgangs. Eine präzisere Regelung des Vakuumkühlvorgangs kann eine Verkürzung der Betriebsdauer zur Folge haben. Hierdurch kann der Gesamtenergiebedarf der Vakuumkühlvorrichtung pro Charge zwar vermindert werden, was sich allerdings nicht oder nur geringfügig auf die benötigte Leistung der Vakuumpumpe auswirkt.

Die DE2301807 betrifft ein Verfahren zum Kühlen und/oder Trocknen von feuchten Nahrungsmitteln unter Vakuum wobei zur Regelung die Temperatur des Nahrungsmittels oder der Atmosphäre, der Druck, die Feuchtigkeitsmenge in der Atmosphäre oder im Nahrungsmittel nach der Kühlung, der Sättigungsgrad der Atmosphäre sowie die Zeit berücksichtigt wird. Auch dieses Dokument betrifft eine Verbesserung der Regelung der Vakuumkühlvorrichtung, welches eine Vielzahl von Parametern berücksichtigt.

In der US2072737 ist ein Verfahren zum Kühlen von Backwaren beschrieben, bei welchem die Kruste des Brots weich und feucht gehalten werden soll. Das heisse, gebackene Brot wird während einer ersten Periode abgekühlt, sodass die Kruste teilweise gekühlt wird. Dann wird das Brot weiter abgekühlt, indem es in eine Vakuumumgebung eingebracht wird, wobei das Vakuum derart eingestellt wird, dass es oberhalb des Dampfdrucks des Wassers bei (Brot)krustentemperatur gehalten wird.

DE10 2008 035 068 A1 betrifft ein Verfahren zur Herstellung von Backwaren oder Frittierprodukten, bei welchem während der gesamten Teigverarbeitung und Teigbearbeitung eine hohe relative Luftfeuchtigkeit eingehalten und die fertig gebacken heisse Backware einem Vakuumkühlverfahren unterzogen wird. Die relative Luftfeuchtigkeit soll grösser oder gleich 96% betragen.

AT400279B beschreibt ein Verfahren zur Erzeugung und Konservierung von vorgebackenen Backwaren. Die Teiglinge werden teilweise fertig gebacken und dann schockartig auf unter 0°C abgekühlt. Die Teiglinge enthalten 5-15% mehr Wasser bezogen auf die Mehlmenge sowie wasserbindende Zugabemittel. Daher kann die Backzeit um 15-45% verkürzt werden und die Backtemperatur um 5 bis 25% erhöht werden. Im heissen Zustand werden die Backwaren mit Unterdruck beaufschlagt.

Die WO2012082060 beschreibt eine Vakuumkühlanlage für Backgut, die mit Niederdruckdampf befeuchtet wird. Die Vorrichtung umfasst einen Dampferzeuger zur Erzeugung von Dampf unter einem Unterdruck. Der Dampf ist im Wesentlichen frei von Luft, wobei der Dampferzeuger in Verbindung mit der Vakuumkammer angeordnet ist, so dass der erzeugte Dampf in die Kammer ohne gleichzeitige Luftzufuhr eingeführt wird.

Das Dokument JP2010-181042 beschreibt eine Vakuumkühlung, bei welcher die Temperatur des Lebensmittels wesentlich höher ist als die Sattdampftemperatur in der Vakuumkammer. In diesem Fall kommt es zu einem mehr oder weniger schlagartig erfolgenden Aufblähen des Lebensmittels. Dieses Aufblähen kann die Oberflächenqualität des Lebensmittels beeinträchtigen. Daher wird eine Abkühlkurve vorgeschlagen, in welcher zu Beginn des Evakuiervorgangs ein starker Druckabfall vorgesehen ist, bis die Sattdampftemperatur der Lebensmitteltemperatur entspricht, und danach eine Evakuierungsphase anschliesst, in welcher ein langsamerer Druckabfall erfolgt. Um eine derartige Vakuumkühlung zu betreiben, ist zusätzliche eine Vorkühlung erforderlich. Die Vakuumkühlung erfolgt nach einem vorprogrammierten Kühlprogramm. Der Druckabfall kann durch Verschliessen eines Belüftungsventils für die Luftzufuhr erhöht werden, weil bei geschlossenem Belüftungsventil keine Umgebungsluft in die Vakuumkammer gelangen kann. Will man den Druckabfall verringern, kann man das Belüftungsventil zumindest teilweise wieder öffnen. Die ventilgesteuerte Druckregelung wirkt sich nachteilig auf den Energiebedarf der Vakuumpumpe aus, denn die Vakuumpumpe muss dauernd die maximale oder zumindest konstant eine hohe Leistung erbringen. Lebensmittel mit einer maximalen Temperatur von 50°C können mit dieser Vorrichtung zur Vakuumkühlung abgekühlt werden. Für Backgut ist diese Vorrichtung nicht geeignet, da die Temperaturen von gebackenem Brot von etwa 95°C bis etwa 150° C betragen können, siehe auch Dokument DE2507003 A1.

JP 2003 235530 A und JP 2007 192459 A zeigen weiteren relevanten Stand der Technik. I

Im Stand der Technik wird daher der gesamte Wasserdampf mit der Vakuumpumpe in die Umgebung geleitet. Dementsprechend erhöht sich der Durchsatz durch die Vakuumpumpe um bis zu dem hundertfachen Wert des Luftdurchsatzes. Ein Teil des Wasserdampfs kann gezielt dafür genutzt werden, den Feuchtigkeitsgehalt der Backwaren zu erhöhen. Diese Lösung ist mit einem hohen Energieverbrauch verbunden. Dementsprechend muss eine Vakuumpumpe mit hoher Leistung eingesetzt werden. Die Pumpenleistung beträgt üblicherweise um die 45 kW. Die Verwendung einer derart leistungsstarken Vakuumpumpe hat neben dem hohen Energieverbrauch eine ganze Reihe von Nachteilen im Betrieb.

Zumeist werden ölgeschmierte Vakuumpumpen vorgesehen, um das Dampfvolumen abzupumpen, weil sie einen hohen elektrischen Anschlusswert aufweisen. Während des Betriebs der Vakuumpumpe kommt der abzusaugende Dampf mit dem Schmieröl der Vakuumpumpe in Kontakt. Wenn der Dampf kondensiert, bevor er in die Vakuumpumpe gelangt oder im Innenraum der Vakuumpumpe kondensiert, kommt es zur Bildung eines Wasser-Öl-Gemisches, das eine stabile Emulsion ausbildet. Das Schmieröl muss deutlich über den Siedepunkt von Wasser erhitzt werden, um eine Emulsionsbildung zu verhindern. Das Schmieröl hat einen Siedepunkt von über 100°C. Der Siedepunkt des Wassers liegt darunter. Die Vakuumpumpe sollte daher über dem Siedepunkt des Wassers betrieben werden. Hierzu sollte die gesamte Vakuumpumpe, die mit dem Dampf in Berührung kommt, eine Temperatur aufweisen, die über dem Siedepunkt des Wassers liegt, das heisst, das Wasser verdampft unter atmosphärischen Bedingungen. Hierzu ist es erforderlich, dass die Vakuumpumpe läuft, auch wenn sie gerade nicht für die Vakuumbildung benötigt wird, damit die notwendige Betriebstemperatur für die Vakuumpumpe gewährleistet ist. Eine Ölemulsion kann entstehen, solange sich Dampf in der Vakuumkammer befindet, auch wenn die Vakuumkammer nicht mehr zur Durchführung einer Vakuumkühlung verwendet wird. Daher sollte die Vakuumpumpe mindestens eine Stunde lang weiter laufen, nachdem der letzte Vakuumkühlvorgang abgeschlossen ist. Die Vakuumpumpe sollte auch mindestens eine Stunde vorzugsweise mindestens 90 Minuten, besonders bevorzugt mindestens zwei Stunden früher in Betrieb genommen werden, damit sie die notwendige Betriebstemperatur erreicht.

Der Vakuumpumpe kann ein Abscheider nachgeschaltet sein, um den Wasserdampf zu kondensieren. Wenn in der Vakuumpumpe bereits Wasserdampf kondensiert, nimmt dieser Wasserdampf Schmieröl auf. Daher befinden sich im Wasserdampfkondensat klebrige Schmierölrückstände, die in den Wasserablauf gelangen können. Da die Ölemulsion, die durch den kondensierenden Wasserdampf in der Vakuumpumpe gebildet wird, stabil ist, kann sie unter Umständen nicht durch einen konventionellen Ölfilter abgeschieden werden. Die zum Einsatz kommenden Abscheider sind voluminös, aufwändig zu entwässern und zu reinigen.

Die Verwendung einer leistungsstarken Vakuumpumpe kann auch dazu führen, dass Verunreinigungen, wie Schmutzpartikel, Lebensmittelfette und andere Backrückstände aus der Vakuumkammer abgesaugt werden. Filter können in der Vakuumleitung zwischen der Vakuumkammer und der Vakuumpumpe eingebaut sein, um zu verhindern, dass diese Verunreinigungen in die Vakuumpumpe gelangen können. Jeder Filter in der Vakuumleitung erhöht allerdings den Druckverlust, was in Bereichen von 200 bis 300 mbar noch einen vernachlässigbaren Effekt darstellt, allerdings bei Drücken von unter 20 mbar, insbesondere unter 5 mbar und darunter eine deutliche Erhöhung der Pumpenleistung erfordert, damit eine Evakuierung im unteren Vakuumbereich erfolgen kann.

Das Kondensat des aus der Vakuumkammer abgesaugten Dampfes ist sehr sauer und Maschinenteile der Vakuumpumpe aus Stahl können korrodieren, wenn sie in Kontakt mit dem Kondensat kommen. Es ist zwar möglich, Vakuumpumpenteile sowie Filter oder Abscheider aus rostfreiem Stahl einzusetzen. Allerdings hat sich gezeigt, dass es an Stellen, wo sich Kondensat in einer Totzone ansammelt, auch Edelstahlelemente korrodieren können.

Um die Öltemperatur ständig über dem Siedepunkt des Wassers halten zu können, muss die Vakuumpumpe zwangsläufig immer eingeschaltet sein. Dies führt zu zusätzlichem Energiebedarf, denn die Vakuumpumpe bleibt eingeschaltet, selbst wenn sie für das Vakuumkühlverfahren nicht benötigt wird.

Der Verlauf des Kühlverfahrens kann die Qualität des vakuumgekühlten Lebensmittels beeinflussen. Der Verlauf des Kühlverfahrens umfasst insbesondere eine Regelung des Drucks in der Vakuumkammer sowie gegebenenfalls eine Regelung der Temperatur. Im Stand der Technik erfolgt die Druckregelung gemäss einer Regelungsvorschrift, die den Verlauf des Drucks über der Zeit abbildet, das heisst einer Druckkurve. Aus der JP2003 - 235530 ist ein Verfahren zur Vakuumkühlung von Lebensmitteln bekannt, welches eine Druckregelung verwendet, wobei die Druckregelung einen vordefinierten Druckverlauf umfasst, welcher in einem programmierbaren Regler gespeichert ist. Es werden zwei Druckverläufe beschrieben, eine schnelle Evakuierung für Lebensmittel mit geringem Wassergehalt und eine langsame Evakuierung für Lebensmittel mit hohem Wassergehalt. Der Druckabfall erfolgt hierbei linear in Abhängigkeit von der Kühlzeit. Hierzu wird dem Vakuumbehälter vor Beginn der Kühlung Luft zugeführt, sodann der Innenraum des Vakuumbehälters mittels einer Vakuumpumpe evakuiert. Nach einer Variante wird die Vakuumpumpe mit konstanter Leistung betrieben, nach einer weiteren Variante wird die Drehzahl der Vakuumpumpe zu Beginn des Evakuiervorgangs gering gehalten und im Verlauf des Evakuiervorgangs wird die Drehzahl der Vakuumpumpe kontinuierlich erhöht. Vor und während des Evakuiervorgangs kann dem Vakuumbehälter über ein Proportionalventil Luft zugeführt werden. Das Proportionalventil dient der Regelung der Luftmenge, welche dem Vakuumbehälter zugeführt wird.

Die Druckkurve wird durch die Rezeptur der jeweiligen Lebensmittel bestimmt. Bisher musste der Druck über ein Ventil zweipunktgeregelt werden. Das Ventil weist im Wesentlichen zwei Betriebszustände auf, den geschlossenen Zustand, in welchem die Verbindung zur Vakuumpumpe unterbrochen ist und den offenen Zustand, in welchem die Verbindung zu Vakuumpumpe besteht und Dampf aus der Vakuumkammer abgesaugt werden kann. Wenn das Ventil öffnet, erfolgt die Reduktion des Drucks schlagartig. Diese schlagartige Druckverringerung kann dazu führen, dass Feuchtigkeit aus dem Lebensmittel austritt und in den Dampfkreislauf gelangt.

Die schlagartige Druckverringerung kann dazu führen, dass das Backgut oder Kühlgut durch die grosse Dampfmenge aufreisst und beschädigt wird. Es ist auch möglich, dass dadurch Teile des Kühlguts oder Backguts in das Vakuumsystem gelangen.

Daher können viele Lebensmittel mit dieser Zweipunktregelung nicht optimal gekühlt werden. Eine Qualitätseinbusse der Lebensmittel muss dadurch in Kauf genommen werden. Die Vakuumpumpe muss zudem für diese einfache Zweipunktregelung kontinuierlich ohne Unterbrechung laufen.

Der vorliegenden Erfindung liegt die Aufgabe zugrunde, ein Verfahren zur Regelung einer Vakuumkühlvorrichtung zu entwickeln, welches auf beliebige Lebensmittel anwendbar ist. Insbesondere ist ein Verfahren für die Regelung einer Vakuumkühlvorrichtung mit einem Dampfkondensator zu entwickeln, mittels welchem ein grosser Teil des in der Vakuumkammer entstehenden Dampfs kondensiert werden kann, ohne dass es zu einer Kontamination der Vakuumpumpe kommt. Es ist eine weitere Aufgabe der Erfindung, ein Verfahren zur Regelung einer Vakuumkühlvorrichtung zu entwickeln, welches den Leistungsbedarf der Vakuumpumpe verringern soll.

Die Aufgabe wird durch ein Verfahren zur Regelung einer Vakuumkühlvorrichtung nach Anspruch 1 gelöst. Weitere vorteilhafte Ausführungsbeispiele sind Gegenstand der Unteransprüche 2 bis 9. Somit muss erfindungsgemäss das Dampfvolumen nicht durch die Vakuumpumpe umgewälzt werden, da der Dampf durch die Kondensation bereits aus der Vakuumkammer entfernt wird.

Das Verfahren zur Regelung einer Vakuumkühlvorrichtung zur Kühlung eines Lebensmittels, insbesondere von heissen Backwaren umfasst die nachfolgenden Schritte. Die Vakuumkühlvorrichtung enthält eine Vakuumkammer zur Aufnahme des Lebensmittels. In einem ersten Schritt wird die Vakuumkammer mit zu kühlenden Lebensmitteln beschickt. In einem zweiten Schritt wird dem Lebensmittel ein Kühlprogramm zugeordnet. In einem dritten Schritt wird die Vakuumkammer geschlossen. In einem vierten Schritt wird eine Vakuumpumpe in Betrieb genommen um die Vakuumkammer zu evakuieren, wobei der Druck in der Vakuumkammer mit einem Druckmessgerät erfasst wird, das Druckmessgerät den Druck in ein Druckmesssignal umwandelt, wobei das Druckmesssignal einer Regeleinheit zugeführt wird, wobei die Regeleinheit ein Speicherelement enthält, wobei das Speicherelement das Kühlprogramm für jedes zu kühlende Lebensmittel enthält, wobei das Kühlprogramm einen Solldruckverlauf enthält. Der Solldruckverlauf entspricht dem gewünschten Druck, wobei zu mindestens einem Zeitpunkt innerhalb der Kühlperiode das Druckmesssignal mit dem Solldruck zu diesem Zeitpunkt verglichen wird. Dem Solldruck ist eine Solldrehzahl der Vakuumpumpe zugeordnet, wobei die Vakuumpumpe mit einem Drehzahlmessgerät ausgestattet ist, um die Drehzahl der Vakuumpumpe zu messen, wobei zu dem mindestens einen Zeitpunkt die Drehzahl der Vakuumpumpe mit der Solldrehzahl verglichen wird und ein Anpassungselement vorgesehen ist, um die Drehzahl an die Solldrehzahl anzupassen. Das heisst, die Drehzahl der Vakuumpumpe folgt nicht einem vorprogrammierten Verlauf, wie er in der JP2003-235530 offenbart ist, sondern wird anhand eines Sollwertes eingestellt, der dem Druck entsprechend dem Solldruckverlauf entspricht. Gemäss Solldruckverlauf ist jedem Zeitpunkt zwischen dem Anfang und dem Ende des Evakuiervorgangs ein Solldruck zugeordnet. Um diesen Solldruck zu erreichen, ist eine zu diesem Solldruck gehörige Solldrehzahl erforderlich, die sich aus der Kennlinie der Vakuumpumpe ergibt. Die Drehzahl der Vakuumpumpe wird somit durch die Regelung fortwährend an die Solldrehzahl angepasst. Durch diese Massnahme wird die Vakuumpumpe nur genau mit der Leistung betrieben, die für jeden Zeitpunkt des Evakuiervorgangs zum Erreichen des zu diesem Zeitpunkt gewünschten Drucks in der Vakuumkammer optimal ist. Durch die Regelung der Drehzahl kann sowohl sicher gestellt werden, dass der Druck zu jedem Zeitpunkt im Wesentlichen dem Solldruck entspricht als auch vermieden werden, die Vakuumpumpe über längere Zeiträume mit zu hoher Leistung zu betreiben. Unter Druck ist in dieser Anmeldung ein Unterdruck in Bezug auf den atmosphärischen Druck zu verstehen. Überraschenderweise kann der Leistungsbedarf der Vakuumpumpe daher um bis zu 30% gesenkt werden. Alternativ erfolgt eine Temperaturmessung und aufgrund der Temperaturmessung erfolgt eine Regelung des Drucks. Die Temperaturmessung kann beispielsweise durch ein Thermoelement erfolgen, welches die Temperatur des Lebensmittels misst. Das heisst, es wird insbesondere die Kerntemperatur im Gebäck erfasst. Die Temperatur kann über den Druck geregelt werden, denn mit fallendem Druck fällt auch die Temperatur der Vakuumkammer. Die gemessene Temperatur wird im Temperaturmessgerät in ein Temperaturmesssignal umgewandelt. Das Temperaturmesssignal wird der Regeleinheit zugeführt. Die Regeleinheit enthält ein Speicherelement, welche das Kühlprogramm enthält. Das Kühlprogramm enthält in diesem Fall eine Funktion, welche die Abhängigkeit des Drucks von der Temperatur beschreibt. Durch die Funktion wird der Temperatur ein Druck zugeordnet und eine dem Druck entsprechende Solldrehzahl der Vakuumpumpe errechnet. Die Regelung der Vakuumpumpe erfolgt dann beispielsweise wie oben beschrieben.

Insbesondere kann der Druckverlauf durch eine Druckverlaufkurve charakterisiert sein, welche zumindest eine der nachfolgenden Kurvenverläufe umfasst: eine kontinuierliche Abnahme, eine Sägezahnform, eine Stufenform oder eine zumindest abschnittsweise konstante Druckverlaufkurve. Die kontinuierliche Abnahme beschreibt einen Druckverlauf, bei welchem sich der Druck mit zunehmender Zeitdauer vermindert. Insbesondere kann die kontinuierliche Abnahme des Drucks vom Beginn des Evakuiervorgangs bis zu dessen Ende erfolgen. Nach einem Ausführungsbeispiel kann die Einstellung einer kontinuierlichen (i.e. schonenden) Druckabnahme für bestimmte Produkte vorgenommen werden, insbesondere für solche, die eine Kruste mit glatter Oberfläche aufweisen.

Nach einem Ausführungsbeispiel kann der Umgebungsdruck vor Beginn der Vakuumkühlung ermittelt werden. Die Druckverlaufkurve wird in Abhängigkeit vom Umgebungsdruck ermittelt, ausgewählt oder angepasst. Schwankungen des Umgebungsdrucks bedingt durch die Wetterlage können durch die Anpassung des Kühlprogramms an den zum Zeitpunkt des Beginns der Vakuumkühlung herrschenden Umgebungsdruck ausgeglichen werden. Die Vakuumkühlung gemäss dem an den Umgebungsdruck angepassten Kühlprogramm erfolgt demnach unabhängig vom Umgebungsdruck, sodass wetterbedingte Druckschwankungen keinen Einfluss auf die Qualität des vakuumgekühlten Lebensmittels haben können. Unter Umgebungsdruck wird insbesondere der Luftdruck verstanden, welcher ausserhalb der Vakuumkühlvorrichtung herrscht. Hierzu kann insbesondere ein Druckmessgerät vorgesehen sein, welches Messdaten für den Umgebungsdruck an die Regeleinheit übermittelt. In der Regeleinheit erfolgt ein Abgleich der Abkühlprogramme, die für ein bestimmtes Produkt bei verschiedenen Umgebungsdrücken, das heisst verschiedenen Wetterbedingungen abgespeichert sind. Entspricht der Umgebungsdruck beispielsweise bis auf eine Toleranz von +/-10 mbar dem für das Abkühlprogramm gemessenen Umgebungsdruck, kann dieses Abkühlprogramm zum Einsatz kommen, andernfalls ein anderes Abkühlprogramm gewählt werden oder zwischen den beiden in Bezug auf den Umgebungsdruck nächstliegenden Abkühlprogrammen interpoliert werden.

Nach einem Ausführungsbeispiel kann der Druckverlauf pulsierend sein. In diesem Fall sinkt der Druck in einer ersten Periode schlagartig ab, in ähnlicher Weise wie eine schlagartige Druckabsenkung unmittelbar nach der Öffnung eines Absperrelements erfolgt. Während einer zweiten Periode bleibt der Druck konstant, in ähnlicher Weise, wie es unmittelbar nach dem Schliessen des Absperrelements nicht zu einer Druckänderung kommt oder sich der Druck nur unwesentlich ändert, also im Wesentlichen als konstant angesehen werden kann. Das Anpassungselement kann nach einem Ausführungsbeispiel einen Frequenzumrichter umfassen.

Insbesondere ist die Drehzahl der Vakuumpumpe proportional zum Druck in der Vakuumkammer. Durch eine Änderung der Drehzahl der Vakuumpumpe kann somit der Druck in der Vakuumkammer angepasst werden.

Zwischen der Vakuumkammer und der Vakuumpumpe kann eine Vakuumleitung angeordnet sein, welche ein Absperrelement und/oder ein Regelelement enthält, welches die Verbindung zwischen Vakuumkammer und Vakuumleitung unterbrechen kann, insbesondere bei Notfällen oder für Revisionsarbeiten.

Die Vakuumpumpe ist fast ausschliesslich während der Kühlperiode in Betrieb, da das Vakuum über die Drehzahl geregelt werden kann und die Abluft aus der Vakuumkammer im Wesentlichen frei von Dampf ist.

Die Vakuumpumpe muss nicht abgestellt werden, sie kann im Bereitschaftsbetrieb weiterlaufen. Im Bereitschaftsbetrieb verrichtet die Vakuumpumpe keine Arbeit. Die Vakuumkammer der Vakuumkühlvorrichtung zur Kühlung von Lebensmitteln, insbesondere heissen Backwaren enthält insbesondere eine Produktkammer zur Aufnahme des Lebensmittels für dessen Kühlung und eine Abscheidekammer, wobei die Vakuumpumpe mit der Abscheidekammer verbunden ist und der von der Vakuumpumpe abgesaugte Dampf aus der Vakuumkammer in einen Dampfkondensator geführt wird, in welchem der Dampf von in der Produktkammer abgekühlt wird und kondensiert. Der Dampfkondensator enthält ein Kühlmittel in einer Wanne, sowie ein Dampfeinleitungselement, wodurch der Dampf in das Kühlmittel eingeleitet wird. Die Temperatur des Kühlmittels kann einstellbar sein, Nach einem Ausführungsbeispiel kann die Vakuumkammer über ein Servoventil belüftet werden. Die Belüftung kann daher mittels des Servoventils geregelt werden. Insbesondere kann die Regelung der Belüftung auch über die Rezeptur erfolgen. Das heisst, dass das Kühlprogramm auch Anweisungen zur Belüftung während des Vakuumkühlvorgangs enthalten kann. Zur Belüftung der Vakuumkammer wird Frischluft in die Vakuumkammer geführt. Die Frischluft wird über ein Rohrbündel in die Vakuumkammer geführt. Nach einem Ausführungsbeispiel kann das Rohrbündel als Doppelrohr, nach einem weiteren Ausführungsbeispiel als koaxiales Rohrbündel ausgebildet ein, welches ein Innenrohr und ein Aussenrohr umfasst. Das Dokument JP10-122717 beschreibt einen Wärmetauscher, welcher zum Beheizen oder Kühlen eines innerhalb des Rohres strömenden Mediums dient. Im Kühlbetrieb kann das Kühlfluid im Wärmetauscher verdampft werden, sodass eine Verdunstungskühlung erfolgt.

Diese Verdunstungskühlung wird durch Anlegen eines Vakuums an die Wärmetauscherkammer ermöglicht. Für die Erzeugung des Vakuums werden eine Venturipumpe und eine Vakuumpumpe benötigt. Im Gegensatz zu der vorliegenden Lösung wird jedoch keine Frischluft über das Doppelrohr geführt, sondern ein Heiz- oder Kühlmedium.

Das Doppelrohr kann auch zwei nebeneinander liegende Rohre umfassen, insbesondere ein erstes und ein zweites Rohr umfassen, welche nebeneinander angeordnet sind.

Das koaxiale Rohrbündel weist ein Innenrohr auf, durch welches die Abluft der Vakuumpumpe in die Umgebung eingeleitet wird und ein Aussenrohr, durch welches die Frischluft in die Vakuumkammer eingeleitet werden kann.

In dem Aussenrohr oder in einem der ersten oder zweiten Rohre ist ein Servoventil angeordnet, welches insbesondere gemäss der Anweisungen eines Kühlprogramms gesteuert wird. Je ein Kühlprogramm kann für ein beliebiges Lebensmittel verwendet werden. Das heisst es können eine beliebige Anzahl an Kühlprogrammen in der Vakuumkammer ablaufen, wenn das Regelungsverfahren zum Einsatz kommt. zum Einsatz kommt. Daher ist die Vakuumkühlvorrichtung zur Vakuumkühlung von beliebigen Lebensmitteln geeignet. Das Regelungsverfahren, erlaubt es zudem Chargen von unterschiedlichen Lebensmitteln unmittelbar nacheinander zu verarbeiten, solange ein Kühlprogramm für jedes der Lebensmittel in dem Speicherelement abgelegt ist.

Da mit dem Verfahren zur Regelung jeder beliebige Druckverlauf realisiert werden kann, kann auch auf eine Zufuhr von Feuchtigkeit, das heisst zusätzlichem Wasser oder Wasserdampf beispielsweise in der Form von Sprühnebeln in die Vakuumkammer verzichtet werden. Eine Erhöhung des Wassergehalts der Backwaren kann vorgesehen werden, wenn die Backwaren eine besonders feuchte Oberfläche aufweisen müssen. Allerdings kann eine zu starke Druckdifferenz, insbesondere eine schlagartige Druckabsenkung wie sie mit einer Zweipunktregelung auftreten kann, dazu führen, dass die Feuchtigkeit aus dem Inneren der Lebensmittel an deren Oberfläche gelangt und von dort in die Vakuumkammer und mit dem Dampfkreislauf zu dem Dampfkondensator.

Der Dampfkondensator ist gemäss eines Ausführungsbeispiels ein Bestandteil der Vakuumkammer. Der Dampfkondensator enthält gemäss dieses Ausführungsbeispiels ein Wasserbad am Boden der Vakuumkammer.

Gleichzeitig dient der Dampfkondensator als Schmutzfilter, da mit dem Dampf mitgeführte Schmutzpartikel im Wasserbad kondensieren und mit dem Kondensat ausgetragen werden können. Der Dampfkondensator kann unmittelbar unter der Produktkammer angeordnet sein, um den Dampf aus der Produktkammer aufzunehmen. Es ist auch möglich, dass der Dampfkondensator zwar mit der Produktkammer in fluidleitender Verbindung steht, aber baulich von der Produktkammer getrennt ist, ja sogar als separates Modul ausgeführt sein kann. Die Kondensationswärmeenergie kann im Produktionsprozess genutzt werden, beispielsweise in einem Vorwärmer. Das heisst, es kann eine Vorrichtung zur Wärmerückgewinnung vorgesehen sein. Diese Wärmerückgewinnung kann zur Erwärmung oder zum Vorwärmen des Prozesswassers verwendet werden. Während der Vakuumkühlung verdampft Wasser in den Lebensmitteln und deshalb werden diese abgekühlt. Der Verarbeitungsprozess für Backwaren läuft wie folgt ab:

Die Backwaren werden bis zu 60 min gebacken, wobei es nach circa 2/3 der zur Verfügung stehenden Zeit eine Trocknung an den Backvorgang anschliesst. Das heisst, gemäss diesem Beispiel würde der Backvorgang ca. 40 min und der Trocknungsvorgang ca. 20 min in Anspruch nehmen.

Das gesamte Wasserdampfvolumen wird durch ein Wasserbad innerhalb der Vakuumkammer geleitet, dadurch kondensiert der Dampf und erwärmt das Wasser. Die anfallende Wärmeenergie kann mit einer Kältemaschine dem Wasserbad entzogen und kann z.B. für die Warmwasseraufbereitung oder für Heizzwecke, genutzt werden.

Die Temperatur des Wasserbades wird überwacht und garantiert einen reproduzierbaren Vakuumprozess. Das Wasserbad hat eine gute Filterwirkung, dadurch können Backrückstände etc. nicht in die Vakuumpumpe gelangen.

Das anfallende Kondenswasser ist sauer und wird im Wasserbad verdünnt, da der Wasseranteil des Dampfs vom Kühlmittel aufgenommen wird. Da als Kühlmittel bevorzugt Wasser eingesetzt wird, erfolgt eine Verdünnung des sauren Kondenswassers in dem in der Wanne befindlichen Kühlmittel.

Das Kühlmittel wird über eine Kühlmittelablassleitung abgelassen. Durch sporadisches Abschlämmen werden im Kühlmittel, das heisst im Wasser gelöste Backrückstände etc. abgeführt.

Da die Verunreinigungen, wie Backrückstände sich mit der Zeit im Kühlmittel und daher in der Wanne des Dampfkondensators ansammeln, kann es zu Beeinträchtigungen beim Betrieb des Dampfkondensators kommen. Daher erfolgt mit dem Nachfüllen des Wasserbades ein interner Reinigungsprozess der Vakuumkammer, das heisst der Abscheidekammer, der Produktkammer sowie des Dampfkondensators.

Nach jedem der Ausführungsbeispiele kann eine Mehrzahl von Kühlprogrammen verwendet werden. Jedes dieser Kühlprogramme enthält eine oder mehrere Abkühlkurven, welche vom Anlagenbetreiber nach seinen Bedürfnissen angepasst werden kann. Der Anlagenbetreiber kann somit für jedes Lebensmittel eine eigene Abkühlkurve erstellen. Diese Abkühlkurve enthält beispielsweise die Daten eines Testlaufs für eine neue Sorte Lebensmittel oder neues Verarbeitungsverfahren für ein bekanntes Lebensmittel. Insbesondere können Abkühlkurven für Backwaren mit einer anderen Zusammensetzung erstellt werden. Alternativ oder in Ergänzung hierzu können Abkühlkurven für Backwaren einer anderen Grösse oder einer anderen Form erstellt werden. Für jeden Testlauf kann die entsprechende Abkühlkurve aufgezeichnet werden. Wenn ein Testlauf besonders vielversprechende Ergebnisse geliefert hat, kann die aufgezeichnete Abkühlkurve dieses Testlaufs wieder verwendet werden. Insbesondere kann eine Protokollierung vergangener Testläufe oder Versuche erfolgen. Die Protokollierung kann in einer Datenbank erfolgen. Insbesondere können in der Datenbank der Druckverlauf, gegebenenfalls der Temperaturverlauf sowie der Verlauf des Feuchtegehalts des Dampfs in der Vakuumkammer festgehalten werden. Die Datenbank kann mit einer Suchfunktion ausgestaltet sein, mittels welcher der Anlagenbetreiber Abkühlkurven zu früheren Versuchen ermitteln kann. Hierzu kann er beispielsweise nach dem Versuchsdatum, der Art des Lebensmittels, der Abkühlzeit suchen. In der Datenbank können auch Abkühlprogramme für dasselbe Lebensmittel gespeichert werden, die bei unterschiedlichen Umgebungsdrücken erstellt worden sind.

Auf einem Display können dem Anlagenbetreiber die Auswahlmöglichkeiten für die Lebensmittel und/oder die Abkühlprogramme angezeigt werden. Zusätzlich ist eine Eingabevorrichtung vorgesehen, welche dem Anlagenbetreiber ermöglicht, jedes gespeicherte Abkühlprogramm abzurufen oder neue Abkühlprogramme einzugeben. Die Eingabevorrichtung kann einen berührungsempfindlichen Bildschirm umfassen, um die Eingaben für die Vakuumkühlung des gewünschten Produkts vorzunehmen. Gemäss jedem der vorhergehenden Ausführungsbeispiele kann ein Handrad vorgesehen sein, welches eine manuelle Auswahl der gewünschten Abkühlkurve ermöglicht. Jede der Eingabevorrichtungen ist insbesondere für die Manipulation mit Handschuhen geeignet. Hierzu weist beispielsweise das Handrad ein Greifelement, auf, welches um einen beliebigen Winkel drehbar ist. Je nach Position des Greifelements können verschiedene Produkte und/oder Abkühlprogramme ausgewählt werden. Alternativ kann ein Manipulationshebel oder Schieber vorgesehen sein. Selbstverständlich können auch Eingabevorrichtungen vorgesehen sein, die über eine Sprachsteuerung verfügen. Die Eingabevorrichtungen können an der Vakuumkühlvorrichtung angebracht sein oder in einem Kontrollraum für eine zentrale Anlagensteuerung.

Eine direkte Bypassverbindungsleitung zwischen Vakuumkammer und Vakuumleitung kann vorgesehen sein, welche durch ein Bypassventil geöffnet oder geschlossen werden kann. Wenn das Bypassventil geöffnet ist, wird der Dampf nicht über den Kondensator geführt, sondern direkt in die Vakuumleitung eingeleitet. Diese Bypassverbindungsleitung kann am Ende des Vakuumkühlvorgangs eingesetzt werden, wenn der Dampf nur noch wenig Feuchtigkeit enthält. Da der Druckverlust durch den Kondensator entfällt, wenn der Dampf aus der Vakuumkammer direkt in die Vakuumleitung geführt wird, können niedrigere Drücke in der Vakuumkammer erreicht werden.

Die erfindungsgemässen Ausführungsbeispiele haben zumindest einige der nachgenannten Vorteile:
Die Vakuumkammer und der Dampfkondensator, insbesondere das Wasserbad sind nach einem Ausführungsbeispiel eine Einheit, sodass ein zusätzlicher Druckbehälter entfällt, was Kostenvorteile bringt.

Das Kühlmittel dient gleichzeitig als Filterstrecke, um mit dem Dampf mitgerissene Verunreinigungen aus der Produktkammer im Kühlmittel durch Kondensation abzuscheiden.

Es können trocken laufende Vakuumpumpen eingesetzt werden, da die dampfarme Luft, die von der Abscheidekammer angesaugt wird, einen allenfalls niedrigen Wasserdampfgehalt sowie keine Verunreinigungen enthält.

Das saure Kondensat wird verdünnt, indem es im Dampfkondensator vom Kühlmittel Wasser aufgenommen wird.

Die Kondensierungswärmeenergie kann im Produktionsprozess genutzt werden, beispielsweise in einem Vorwärmer oder zur Wärmerückgewinnung.

Der Vakuumprozess ist reproduzierbar. Beispielsweise kann der Verlauf der Vakuumkühlung beispielsweise als Druckverlauf in Abhängigkeit von der Abkühlzeit in einer elektronischen Kontrolleinheit gespeichert werden und immer wieder abgerufen werden und erlaubt durch die genaue Regelung der Vakuumpumpe Chargen mit gleichen Produkteigenschaften zu erhalten.

Eine automatische Reinigung des Dampfkondensators sowie der Produktkammer und/oder der Abscheidekammer erfolgt durch Austausch des Wassers. Dieser Austausch kann ein Teil der Prozessteuerung sein.

Die Vakuumpumpe wird energieeffizient eingesetzt, da sie nur während dem Vakuumprozess eingeschaltet ist. Die Vakuumpumpe ist im Bereitschaftsbetrieb nicht ausgeschaltet, verrichtet aber keine Arbeit.

Mit einer drehzahlgeregelten Vakuumpumpe können alle Lebensmittel gekühlt werden, das heisst es kann ein beliebiger Verlauf der Vakuumkühlung realisiert werden, insbesondere kann eine zusätzliche Befeuchtung der Lebensmittel entfallen. Ist der Dampfkondensator als Teil der Vakuumkühlvorrichtung ausgebildet, entfällt ein zusätzlicher Druckbehälter für die Wasserabscheidung in der Vakuumleitung.

Nachfolgend werden Ausführungsbeispiele der Erfindung anhand der Zeichnungen erläutert. Darin zeigen:
- Fig 1: einen Schnitt durch eine Vakuumkühlvorrichtung nach einem ersten Ausführungsbeispiel
- Fig. 2: einen Schnitt durch eine Vakuumkühlvorrichtung nach einem zweiten Ausführungsbeispiel
- Fig. 3: einen Schnitt durch eine Vakuumkühlvorrichtung nach einem dritten Ausführungsbeispiel

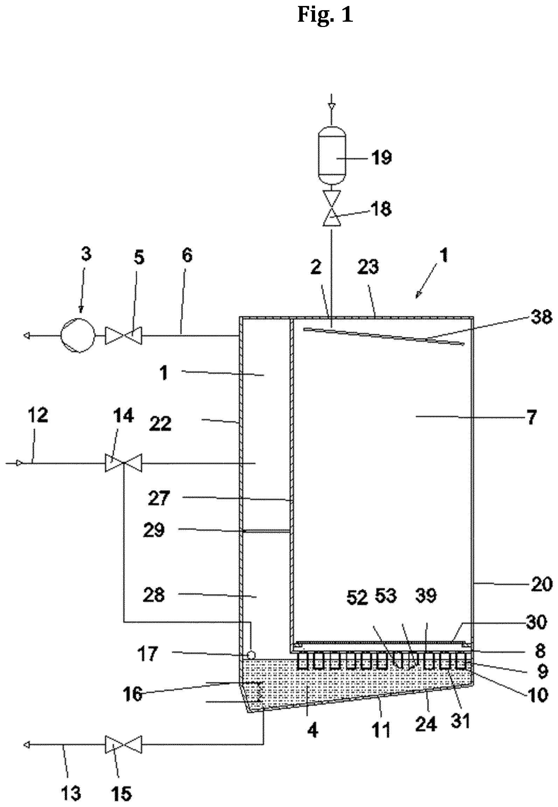

Die in Fig. 1 dargestellte Vakuumkühlvorrichtung 1 umfasst eine Vakuumkammer 2, eine Vakuumquelle 3 und einen Dampfkondensator 4. Die Vakuumquelle 3 ist eine Vakuumpumpe, die über eine Vakuumleitung 6 mit der Vakuumkammer 2 in fluidleitender Verbindung steht. In der Vakuumleitung 6 ist ein Ventil 5 angeordnet. Die Vakuumkammer 2 enthält eine Produktkammer 7, die im Betriebszustand die zu kühlenden Lebensmittel enthält. Des Weiteren enthält die Vakuumkühlvorrichtung 1 eine Abscheidekammer 28. Die Abscheidekammer 28 ist neben der Produktkammer 7 angeordnet und von dieser durch eine Zwischenwand 27 getrennt.

Die Vakuumkammer hat im Bereich der Wand 21 eine nicht dargestellte Tür, welche geöffnet wird, um die Lebensmittel in der Produktkammer 7 zu platzieren und nach Abschluss der Vakuumkühlung wieder aus der Produktkammer 7 zu entnehmen. Die Produktkammer 7 ist mittels eines Belüftungsventils 18, welches oberhalb der Decke 23 angeordnet ist, belüftet werden. Das Belüftungsventil ist über eine Belüftungsleitung mit der Produktkammer 7 verbunden. In der Belüftungsleitung ist ein Filterelement 19 angeordnet, um Verunreinigungen aus der Frischluft herauszufiltern, welche die Qualität der Lebensmittel beeinträchtigen können. Das Belüftungsventil kann als variables Drosselelement ausgestaltet sein. Es kann während des Kühlvorgangs zumindest teilweise geöffnet sein. Während des Beladens und Entladens der Lebensmittel ist das Belüftungsventil in geöffnetem Zustand, damit für Personen, welche sich in der Produktkammer befinden, eine ausreichende Frischluftversorgung gewährleistet ist, selbst wenn die Tür der Vakuumkammer 2 geschlossen ist. Da mit der Frischluft Feuchtigkeit in die Produktkammer gelangt, wird die Frischluft innerhalb der Produktkammer über ein Ablenkelement 38 in Richtung zumindest einer der Wände 21, 25, 26, 27 abgelenkt. Während des Kühlvorgangs kondensieren Tröpfchen auf der Oberfläche des Ablenkelements 38 oder an einer der Wände 21, 25, 26, 27. Das Ablenkelement kann mit Ablaufrinnen ausgestattet sein oder es endet an seinem tiefsten Punkt an einer Stelle, von welcher das Kondensat direkt auf den Kammerboden tropfen kann. Mit diesen Massnahmen kann vermieden werden, dass das Kondensat in Kontakt mit den Lebensmitteln kommt.

Die Vakuumkammer 2 enthält den Dampfkondensator 4, der den Boden der Produktkammer 7 ausbildet. Der Dampfkondensator 4 ist von der Produktkammer 7 durch einen Zwischenboden 8 getrennt. Oberhalb des Zwischenbodens 8 ist ein Kammerboden 30 angeordnet. Auf dem Kammerboden 30 werden die Lebensmittel in ihren Gestellen abgestellt. Der Kammerboden 30 dient demnach als Auflage für einen Stikkenwagen, welcher die Gestelle trägt, welche die Auflageflächen für die Lebensmittel ausbilden. Unterhalb des Zwischenbodens 8 ist ein Kanalboden 10 vorgesehen, der mehrere Kanäle 9 enthält. Die Kanäle 9 ragen in eine mit Flüssigkeit gefüllte Wanne 11. Die Flüssigkeit ist ein Kühlmittel, welches über die Kühlmittelzufuhrleitung 12 in die Wanne 11 gelangt und die Wanne über Kühlmittelablassleitung 13 verlassen kann. Üblicherweise wird Wasser als Kühlmittel verwendet. In der Kühlmittelzufuhrleitung 12 ist ein Kühlmittelventil 14 angeordnet. In der Kühlmittelablassleitung 13 ist ein Kühlmittelablassventil 15 angeordnet.

Dem Kühlmittel kann über den Wärmetauscher 16 Wärme entzogen werden, die im Rahmen einer Wärmerückgewinnung an anderer Stelle des Verarbeitungsverfahrens wieder zugeführt werden kann. Das Niveau des Kühlmittels in der Wanne 11 wird über eine Niveauregelung 17 derart geregelt, dass zumindest ein Teil der Kanäle 9 in das Kühlmittel eintaucht, wenn in der Produktkammer 7 Dampf anfällt, der kondensiert werden muss. In den Kanälen 9 und dem Kühlmittel erfolgt der Wärmeübergang zwischen Dampf und Kühlmittel. Unter Dampf wird hierein Wasserdampf-Luftgemisch verstanden, welches aus der Produktkammer 7 abgesaugt wird, wenn über die Vakuumleitung 6 ein Vakuum angelegt wird.

Kühlmittel und Dampf stehen miteinander direkt in Kontakt, denn in den Kanälen 9 sind Öffnungen 31 vorgesehen. Der Dampf strömt durch die Öffnungen 31 und in die flüssigkeitsgefüllte Wanne 11. Sobald der Dampf mit dem Kühlmittel Wasser in Berührung kommt, kondensiert der Wasserdampfanteil. Allfällige im Dampf befindliche Verunreinigungen verbleiben im Kühlmittel, welches sich mit Verunreinigungen anreichert. Das Kühlmittel dient daher als Filterstrecke für den Dampf. Die dampfarme Luft tritt in die Abscheidekammer 28 ein. In den Kanälen 9 oder auf dem weiteren Weg durch das Kühlmittel kondensiert der Dampf zu einem Kondensat. Das Kondensat wird über einen Sammelkanal gesammelt und über eine Kondensatableitung 13 aus dem System entfernt.

Die dampfarme Luft wird über ein in der Abscheidekammer 28 befindliches Abscheideelement 29 geleitet. Es ist zu erwarten, dass sich durch die Blasen, welche sich in der Wanne 11 in Richtung Abscheidekammer 28 bewegen, eine Spritzschicht an der Flüssigkeitsoberfläche ausbildet. Um zu vermeiden, dass Wasserspritzer in den oberen Bereich der Abscheidekammer 28 und in die Vakuumleitung gelangen, kommt das Abscheideelement 29 zum Einsatz. Dieses Abscheideelement kann ein Tropfenabscheider sein, der beispielsweise in Lochblech oder ein Gewirk oder Gewebe umfasst, an welchem Tropfen hängen bleiben. Mehrere derartige Abscheideelemente können hintereinander und/oder übereinander angeordnet werden. Die dampfarme Luft gelangt in die Vakuumleitung und wird über die Vakuumpumpe 3 abgesaugt.

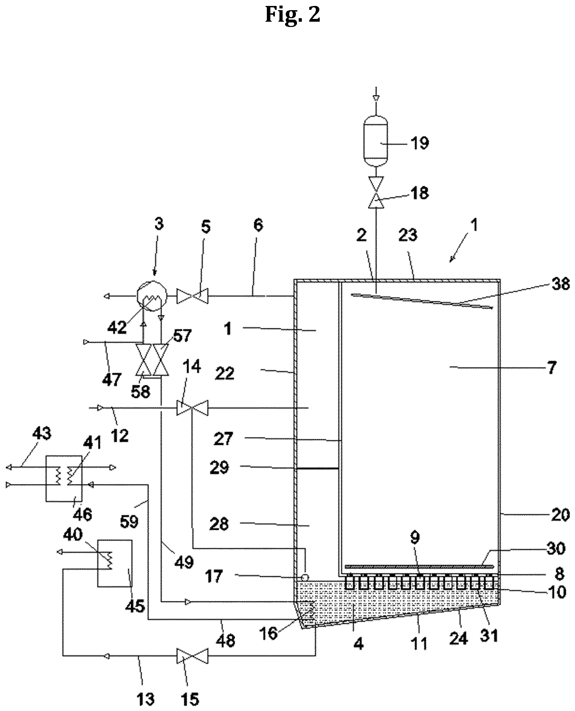

Fig. 2 zeigt eine Variante der Fig. 1 mit Wärmerückgewinnungsanlage. Die Bauelemente, welche die gleiche Funktion wie in Fig. 1 erfüllen, sind gleich bezeichnet. Für deren Beschreibung wird auf Fig. 1 verwiesen. Einerseits kann das bis zu 60° aufgewärmte Kühlflüssigkeit über einen Wärmetauscher 40 für die Abwasserkühlung geleitet werden. Der Wärmetauscher 40 kann in einem Behälter 45 angeordnet sein, durch welchen ein Fluid zirkulieren kann. Dieses Fluid kann ein flüssiges oder gasförmiges Wärmeträgerfluid umfassen. Der Behälter 45 kann insbesondere auch als Abwasserkühler eingesetzt werden. Über die Kühlmittelablassleitung 13 wird das verbrauchte Kühlmittel, das mit Verunreinigungen beladen ist, abgelassen und in die Kanalisation eingeleitet. Vor Einleiten in die Kanalisation wird das Kühlmittel abgekühlt, indem es dem Wärmetauscher 40 zugeführt wird.

Des Weiteren kann ein Wärmetauscher 41 vorgesehen sein, der zum Vorwärmen eines Prozessfluids 43 verwendet werden kann. Das vorzuwärmende Prozessfluid 43 wird über einen Vorwärmer 46 geführt, welcher die Wärme eines Wärmeaustauschfluids 59 aufnimmt, welches den Wärmetauscher 16 über die Ableitung 48 verlässt. Der Wärmetauscher 16 zur Kühlung des in der Wanne 11 des Dampfkondensators 4 befindlichen Kühlmittels wird von dem Wärmetauschfluid 49 über eine Zuleitung 47 gespeist. Diese Zuleitung 47 kann entweder direkt zum Wärmetauscher 16 führen oder eine Verzweigung enthalten, welche der Vakuumpumpe 3 Wärmeaustauschfluid zuführt. Die Vakuumpumpe 3 kann mittels des Wärmeaustauschfluids 49 gekühlt werden, wenn ihre Betriebstemperatur überschritten wird. Wahlweise kann das Wärmaustauschfluid 49, welches die Vakuumpumpe verlässt, in die Zuleitung 47 eingespeist werden. Absperrmittel 57, 58 können vorgesehen werden, um den Kühlkreislauf der Vakuumpumpe 3 mit dem Kühlkreislauf für den Dampfkondensator 4 zu koppeln oder zu entkoppeln.

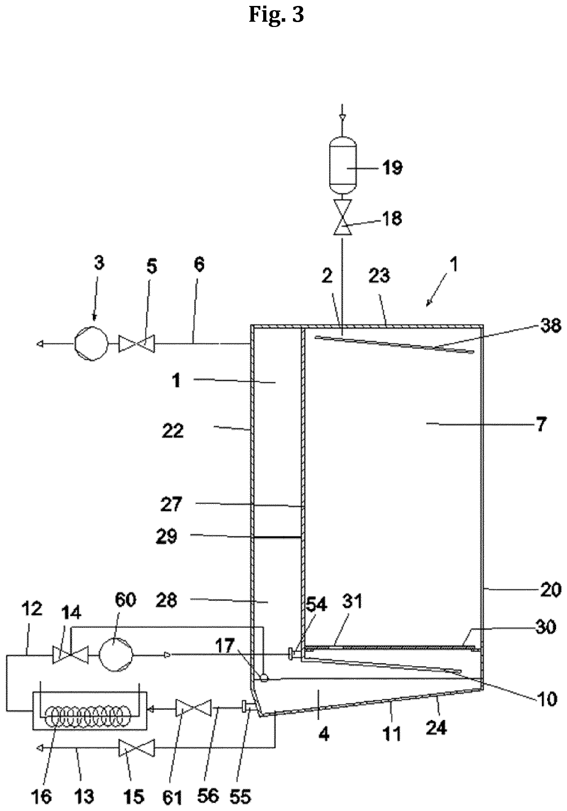

Die in Fig. 3 dargestellte Vakuumkühlvorrichtung 1 umfasst eine Vakuumkammer 2, eine Vakuumquelle 3 und einen Dampfkondensator 4. Die Vakuumquelle 3 ist eine Vakuumpumpe, die über eine Vakuumleitung 6 mit der Vakuumkammer 2 in fluidleitender Verbindung steht. In der Vakuumleitung 6 ist ein Ventil 5 angeordnet. Die Vakuumkammer 2 enthält eine Produktkammer 7, die im Betriebszustand die zu kühlenden Lebensmittel enthält. Des Weiteren enthält die Vakuumkühlvorrichtung 1 eine Abscheidekammer 28. Die Abscheidekammer 28 ist neben der Produktkammer 7 angeordnet und von dieser durch eine Zwischenwand 27 von der Produktkammer getrennt.

Die Vakuumkammer hat im Bereich der Wand 21 eine nicht dargestellte Tür, welche geöffnet wird, um die Lebensmittel in der Produktkammer 7 zu platzieren und nach Abschluss der Vakuumkühlung wieder aus der Produktkammer 7 zu entnehmen. Die Produktkammer 7 kann mittels eines Belüftungsventils 18, welches oberhalb der Decke 23 angeordnet ist, belüftet werden. Das Belüftungsventil ist über eine Belüftungsleitung mit der Produktkammer 7 verbunden. In der Belüftungsleitung ist ein Filterelement 19 angeordnet, um Verunreinigungen aus der Frischluft herauszufiltern, welche die Qualität der Lebensmittel beeinträchtigen können. Das Belüftungsventil kann als variables Drosselelement ausgestaltet sein. Es kann während des Kühlvorgangs zumindest teilweise geöffnet sein. Während des Beladens und Entladens der Lebensmittel ist das Belüftungsventil in geöffnetem Zustand, damit für Personen, welche sich in der Produktkammer befinden, eine ausreichende Frischluftversorgung gewährleistet ist, selbst wenn die Tür der Vakuumkammer 2 geschlossen ist. Da zusammen mit der Frischluft Feuchtigkeit in die Produktkammer gelangt, wird die Frischluft innerhalb der Produktkammer über ein Ablenkelement 38 in Richtung zumindest einer der Wände 21, 25, 26, 27 abgelenkt. Die Wand 26 ist in Fig. 3 nicht sichtbar, da sie vor der Zeichnungsebene liegt und die Wand 25 bildet die hintere Begrenzung der Produktkammer 7 aus. Die beiden Wände 25, 26 sind in der Fig. 2 gezeigt. Während des Kühlvorgangs kondensieren Tröpfchen auf der Oberfläche des Ablenkelements 38 oder an einer der Wände 21, 25, 26, 27. Das Ablenkelement kann mit Ablaufrinnen ausgestattet sein oder es endet an seinem tiefsten Punkt an einer Stelle, von welcher das Kondensat direkt auf den Kammerboden tropfen kann. Mit diesen Massnahmen kann vermieden werden, dass das Kondensat in Kontakt mit den Lebensmitteln kommt.

Die Vakuumkammer 2 enthält den Dampfkondensator 4, der den Boden der Produktkammer 7 ausbildet. Der Dampfkondensator 4 ist von der Produktkammer 7 durch den Kammerboden 30 getrennt. Somit entfällt der in Fig. 1 dargestellte Zwischenboden. Auf dem Kammerboden 30 werden die Lebensmittel in ihren Gestellen abgestellt. Der Kammerboden 30 dient demnach als Auflage für einen Stikkenwagen, welcher die Gestelle trägt, welche die Auflageflächen für die Lebensmittel ausbilden. Unterhalb des Kammerbodens 30 ist ein Kanalboden 10 vorgesehen, der als eine mit Flüssigkeit gefüllte Wanne 11 ausgebildet ist. Die Flüssigkeit ist ein Kühlmittel, welches über die Kühlmittelzufuhrleitung 12 in die Wanne 11 gelangt und die Wanne über eine Kühlmittelablassleitung 13 zumindest teilweise verlassen kann. Üblicherweise wird Wasser als Kühlmittel verwendet. In der Kühlmittelzufuhrleitung 12 kann ein Kühlmittelventil 14 angeordnet sein, dieses Kühlmittelventil ist aber nicht zwingend vorgesehen. Gemäss dem vorliegenden Ausführungsbeispiel wird das Kühlmittel in einem Kühlmittelkreislauf geführt. Der Kühlmittelkreislauf enthält einen Wärmetauscher, der in der Wanne 11 oder ausserhalb der Wanne 11 beispielsweise in der Abscheidekammer 28 oder sogar ausserhalb der Vakuumkühlvorrichtung 1 angeordnet sein kann.

Dem Kühlmittel wird mittels dem Wärmetauschers 16 Wärme entzogen. Diese Wärme kann im Rahmen einer Wärmerückgewinnung an anderer Stelle des Verarbeitungsverfahrens wieder zugeführt werden. Der Wärmetauscher 16 kann beispielsweise als Plattenwärmetauscher ausgeführt sein. Es können auch eine Mehrzahl von Wärmetauschern vorgesehen sein, die in der Wanne 11, der Abscheidekammer 28 oder ausserhalb der Vakuumkühlvorrichtung 1 angeordnet sein können.

Zwischen dem Kammerboden 30 und dem Boden des Kondensators 24 ist ein als eine Rampe ausgebildeter Kanalboden 10 angeordnet. Der Kammerboden 30 enthält mindestens eine Öffnung 31, durch welche der Dampf in Innenraum des Dampfkondensators 4 eintreten kann.

In der Kühlmittelablassleitung 13 ist ein Kühlmittelablassventil 15 angeordnet. Das Niveau des Kühlmittels in der Wanne 11 wird über eine Niveauregelung 17 derart geregelt, dass ein Abstand zwischen der Rampe und der Flüssigkeitsoberfläche bestehen bleibt, wenn in der Produktkammer 7 Dampf anfällt, der kondensiert werden muss. Über den Kanalboden erfolgt eine Flüssigkeitsströmung. Diese Flüssigkeitsströmung wird durch Kühlmittel erzeugt, welches über einen Kühlmitteleintrittsstutzen in den Innenraum des Dampfkondensators 4 gelangt.

Der Kanalboden dient als Stoffaustauschfläche. Der Dampf wird in den Kühlmittelstrom eingetragen und somit der Luft entzogen. Gleichzeitig erfolgt der Wärmeübergang zwischen Dampf und Kühlmittel. Unter Dampf wird hierein Wasserdampf-Luftgemisch verstanden, welches aus der Produktkammer 7 abgesaugt wird, wenn über die Vakuumleitung 6 ein Vakuum angelegt wird. Kühlmittel und Dampf stehen miteinander direkt in Kontakt, denn von der oder den Öffnungen 31 wird der Dampf auf die Oberfläche des Kühlmittelstroms übertragen. Der Dampf strömt durch die Öffnung oder die Öffnungen 31 und in die flüssigkeitsgefüllte Wanne 11. Sobald der Dampf mit dem Kühlmittel Wasser in Berührung kommt, kondensiert der Wasserdampfanteil. Allfällige im Dampf befindliche Verunreinigungen verbleiben im Kühlmittel, welches sich mit Verunreinigungen anreichert. Das Kühlmittel dient daher als Filterstrecke für den Dampf. Die dampfarme Luft tritt in die Abscheidekammer 28 ein.

Insbesondere tritt das Kühlmittel über den Kühlmitteleinlassstutzen 54 unterhalb des Kammerbodens 30 in den Dampfkondensator 4 ein. Das Kühlmittel fliesst entlang dem als Rampe ausgebildeten Kanalboden 10, der als Dampfeinleitungselement dient. Der durch die Öffnung 31 eintretende Dampf strömt parallel zu dem Kühlmittel entlang der dem Kanalboden 10. Auf diesem Weg ist der Dampf in direktem Kontakt mit dem Kühlmittel. Entlang dieses Weges erfolgt ein Stoffaustausch über die Oberfläche des Kühlmittelstroms, indem Dampf vom Kühlmittelstrom aufgenommen wird. Der Kühlmittelstrom fliesst wasserfallartig vom unteren Ende des Kanalbodens 10 in die Wanne 11. Hierbei entsteht eine Spritzschicht, die den Stoffaustausch weiter begünstigt. Das heisst, dass ein grosser Teil des Stoffaustauschs kann bereits erfolgt sein, wenn das umgewälzte Kühlmittel vom unteren Ende des Kanalbodens in das in der Wanne 11 befindliche Kühlmittel eintritt, welches sich am Boden der Vakuumkammer ansammelt.

Entlang dem Kanalboden 10 oder auf dem weiteren Weg in Richtung der Oberfläche des Kühlmittels, kondensiert der Dampf zu einem Kondensat. Alternativ kann in einem nicht gezeigten Ausführungsbeispiel das Ende des Kanalbodens in das Kühlmittel eintauchen. Das Kühlmittel wird über den Kühlmittelablassstutzen 55 in die einen Kühlmittelablauf 56 geführt, welcher zu dem Wärmetauscher 16 geführt wird. Das Kühlmittel durchströmt den Wärmetauscher und wird abgekühlt. Vom Wärmetauscher gelangt das Kühlmittel über die Kühlmittelzufuhrleitung 12 zu einer Umwälzpumpe 60, welche das Kühlmittel zu dem Kühlmitteleinlassstutzen 54 fördert. Der Kühlmittelkreislauf kann mindestens eine Absperrvorrichtung 61 enthalten, um den Betrieb des Kühlmittelkreislaufs zu unterbrechen. Die Absperrvorrichtung 61 kann auch ein Drosselventil umfassen, um den Durchfluss durch den Kühlmittelablauf zu regeln. Alternativ oder in Ergänzung kann auch ein Kühlmittelventil 14 vorgesehen sein, welches den Kühlmittelstrom durch den Wärmetauscher verringern kann oder mittels welchem die Strömung durch den Wärmetauscher verlangsamt werden kann, um die Verweilzeit im Wärmetauscher zu erhöhen oder der Durchfluss erhöht werden kann, um die Verweilzeit im Wärmetauscher zu verringern. Mittels des Kühlmittelventils 14 und/oder der Absperrvorrichtung kann aufgrund einer Temperaturmessung des Kühlmittels oder einer Niveaumessung des Kühlmittels der Durchfluss des Kühlmittels durch den Wärmetauscher sowie das umgewälzte Kühlmittelvolumen geregelt werden.

Überschüssiges Kondensat wird über eine Kondensatableitung 13 aus dem System entfernt. Diese Kondensatableitung dient auch dazu, periodisch die sich im Kühlmittel ansammelnden Verunreinigungen aus dem System zu entfernen.

Die dampfarme Luft wird über ein in der Abscheidekammer 28 befindliches Abscheideelement 29 geleitet. Der Dampfstrom, welcher sich in der Wanne 11 in Richtung Abscheidekammer 28 bewegt kann eine Spritzschicht an der Flüssigkeitsoberfläche ausbilden. Um zu vermeiden, dass Wasserspritzer in den oberen Bereich der Abscheidekammer 28 und in die Vakuumleitung gelangen, kommt das Abscheideelement 29 zum Einsatz. Dieses Abscheideelement kann ein Tropfenabscheider sein, der beispielsweise in Lochblech oder ein Gewirk oder Gewebe umfasst, an welchem Tropfen hängen bleiben. Mehrere derartige Abscheideelemente können hintereinander und/oder übereinander angeordnet werden. Die dampfarme Luft gelangt in die Vakuumleitung 6 und wird über die Vakuumpumpe 3 abgesaugt.

Anstelle oder in Ergänzung zu dem Abscheideelement kann ein Wärmetauscher in der Abscheidekammer vorgesehen sein. Dieser Wärmetauscher kann in den Kühlmittelkreislauf eingebunden sein. Insbesondere kann der Wärmetauscher eingesetzt werden, um durch Erwärmung des in die Vakuumpumpe 3 eintretenden dampfarmen Luftstroms eine Kühlung oder gegebenenfalls eine weitere Kühlung des Kühlmittels zu bewirken.

Des Weiteren kann alternativ zu den vorhergehenden Ausführungsbeispielen oder in Ergänzung hierzu eine Kühlschlange in der Wanne vorgesehen sein, welche berippte Rohrelemente umfasst. Diese berippten Rohrelemente werden vorteilhafterweise durch einen Zwischenboden oder durch einen fest installierten Kammerboden 30, der nur zu Montagezwecken entfernt werden kann, vor Beschädigung geschützt. Wenn die berippten Rohrelemente frei zugänglich sind, besteht die Gefahr, dass diese Rohrelemente beispielsweise bei einer Reinigung vom Reinigungspersonal betreten werden. Einer derartigen Belastung halten die berippten Rohre üblicherweise nicht stand, insbesondere wenn die Rippen als dünnwandige Blechteile ausgebildet sind.

## Patentansprüche

1. Ein Verfahren zur Regelung einer Vakuumkühlvorrichtung (1) zur Kühlung eines Lebensmittels, insbesondere von heissen Backwaren, wobei die Vakuumkühlvorrichtung (1) eine Vakuumkammer (2) zur Aufnahme des Lebensmittels enthält, wobei die Vakuumkammer (2) mit zu kühlenden Lebensmitteln beschickt wird, wobei dem Lebensmittel ein Kühlprogramm zugeordnet wird, die Vakuumkammer (2) geschlossen wird, eine Vakuumpumpe in Betrieb genommen wird, um die Vakuumkammer (2) zu evakuieren, wobei der Druck in der Vakuumkammer (2) mit einem Druckmessgerät erfasst wird oder eine Temperaturmessung in der Vakuumkammer (2) erfolgt und aufgrund der Temperaturmessung der Druck geregelt wird, wobei das Druckmessgerät den Druck in ein Druckmesssignal umwandelt, wobei das Druckmesssignal einer Regeleinheit zugeführt wird, wobei die Regeleinheit ein Speicherelement enthält, wobei das Speicherelement das Kühlprogramm für jedes zu kühlende Lebensmittel enthält, wobei das Kühlprogramm einen Solldruckverlauf enthält, wobei der Solldruckverlauf dem gewünschten Druckverlauf der Vakuumkühlung für das zu kühlende Lebensmittel während der Kühlperiode entspricht, wobei zu mindestens einem Zeitpunkt innerhalb der Kühlperiode das Druckmesssignal mit dem Solldruck zu diesem Zeitpunkt verglichen wird, **dadurch gekennzeichnet, dass** dem Solldruck eine Solldrehzahl der Vakuumpumpe zugeordnet ist, wobei die Vakuumpumpe mit einem Drehzahlmessgerät ausgestattet ist, um die Drehzahl der Vakuumpumpe zu messen, wobei zu dem mindestens einen Zeitpunkt die Drehzahl der Vakuumpumpe mit der Solldrehzahl verglichen wird und ein Anpassungselement vorgesehen ist, um die Drehzahl an die Solldrehzahl anzupassen, wobei in der Regeleinheit ein Abgleich der Abkühlprogramme erfolgt, die für ein bestimmtes Produkt bei verschiedenen Umgebungsdrücken, das heisst verschiedenen Wetterbedingungen abgespeichert sind, wobei dieses Abkühlprogramm zum Einsatz kommen kann, wenn der Umgebungsdruck beispielsweise bis auf eine Toleranz von +/- 10 mbar dem für das Abkühlprogramm gemessenen Umgebungsdruck entspricht, andernfalls ein anderes Abkühlprogramm gewählt werden kann oder zwischen den beiden in Bezug auf den Umgebungsdruck nächstliegenden Abkühlprogrammen interpoliert werden kann, wobei die Vakuumkammer (2) eine Produktkammer (7) zur Aufnahme des Lebensmittels für dessen Kühlung und eine Abscheidekammer (28) enthält, wobei die Vakuumpumpe mit der Abscheidekammer (28) verbunden ist und der von der Vakuumpumpe abgesaugte Dampf aus der Vakuumkammer in einen Dampfkondensator (4) geführt wird, in welchem der Dampf in der Produktkammer (7) abgekühlt wird und kondensiert, wobei der Dampfkondensator ein Kühlmittel in einer Wanne (11) enthält, sowie ein Dampfeinleitungselement (8, 9), wodurch der Dampf in das Kühlmittel eingeleitet wird, wobei zur Belüftung der Vakuumkammer (2) Frischluft in die Vakuumkammer (2) geführt wird, wobei die Frischluft über ein Rohrbündel in die Vakuumkammer (2) geführt wird, wobei das Rohrbündel insbesondere als Doppelrohr oder als koaxiales Rohrbündel ausgebildet sein kann, welches ein erstes und ein zweites Rohr umfassen kann, wobei das koaxiale Rohrbündel ein Innenrohr aufweist, durch welches die Abluft der Vakuumpumpe in die Umgebung eingeleitet wird und ein Aussenrohr aufweist, durch welches die Frischluft in die Vakuumkammer (2) eingeleitet werden kann, wobei in dem Aussenrohr oder in einem der ersten oder zweiten Rohre ein Servoventil angeordnet ist, welches insbesondere gemäss der Anweisungen eines Kühlprogramms gesteuert wird.

2. Verfahren nach Anspruch 1, wobei der Druckverlauf durch eine Druckverlaufkurve charakterisiert ist, welche zumindest eine der nachfolgenden Kurvenverläufe umfasst: eine kontinuierliche Abnahme, eine Sägezahnform, eine Stufenform oder eine zumindest abschnittsweise konstanten Druckverlaufkurve umfasst.

3. Verfahren nach Anspruch 1 oder 2, wobei der Druckverlauf pulsierend ist, sodass der Druck in einer ersten Periode schlagartig absinkt in ähnlicher Weise wie unmittelbar nach der Öffnung eines Absperrelements und während einer zweiten Periode konstant bleibt, in ähnlicher Weise wie unmittelbar nach dem Schliessen des Absperrelements.

4. Verfahren nach einem der vorhergehenden Ansprüche, wobei das Anpassungselement einen Frequenzumrichter umfasst.

5. Verfahren nach Anspruch 4, wobei die Drehzahl proportional zum Druck in der Vakuumkammer (2) ist.

6. Verfahren nach einem der vorhergehenden Ansprüche, wobei zwischen der Vakuumkammer (2) und der Vakuumpumpe eine Vakuumleitung angeordnet ist, welche ein Absperrelement enthält, welches die Verbindung zwischen Vakuumkammer (2) und Vakuumleitung unterbrechen kann, insbesondere bei Notfällen oder für Revisionsarbeiten.

7. Verfahren nach einem der vorhergehenden Ansprüche, wobei die Vakuumpumpe ausschliesslich während der Kühlperiode in Betrieb ist.

8. Verfahren nach einem der vorhergehenden Ansprüche, wobei die Vakuumkammer (2) über ein Servoventil durch eine geregelte Belüftung belüftet wird.

9. Verfahren nach einem der vorhergehenden Ansprüche, wobei je ein Kühlprogramm für ein beliebiges Lebensmittel verwendet werden kann.

## Claims

1. A method for regulating a vacuum cooling device (1) for cooling of a foodstuff, in particular hot bakery products, wherein the vacuum cooling device (1) contains a vacuum chamber (2) for receiving the foodstuff, wherein the vacuum chamber (2) is charged with foodstuff to be cooled, wherein a cooling program is assigned to the foodstuff, wherein the vacuum chamber (2) is closed, wherein a vacuum pump is put into operation to evacuate the vacuum chamber (2), wherein the pressure in the vacuum chamber (2) is recorded with a pressure gauge or a temperature measurement is performed in the vacuum chamber (2) and the pressure is regulated based on the temperature measurement, wherein the pressure measuring device converts the pressure into a pressure measurement signal, the pressure measurement signal being fed to a control unit, wherein the control unit contains a memory element, wherein the memory element contains the cooling program for each foodstuff to be cooled, wherein the cooling program contains a target pressure profile, the target pressure profile corresponds to the desired pressure profile corresponds to the vacuum cooling for the foodstuff to be cooled during the cooling period, wherein the pressure measurement signal is compared with the setpoint pressure at least at one point in time within the cooling period at this point in time, **characterized in that** the target pressure is assigned a target rotational velocity of the vacuum pump, the vacuum pump being equipped with a rotational velocity measuring device to measure the rotational velocity of the vacuum pump, wherein the rotational velocity of the vacuum pump is compared with the target rotational velocity at the at least one point in time and an adaptation element is provided in order to adapt the rotational velocity to the target rotational velocity, wherein the control unit compares the cooling programs that are stored for a specific product at different ambient pressures, that is, different weather conditions, wherein this cooling program can be used if the ambient pressure, for example, corresponds to the ambient pressure measured for the cooling program except for a tolerance of +/- 10 mbar, otherwise another cooling program can be selected or an interpolation between the two cooling programs closest to the ambient pressure can be performed, wherein the vacuum chamber (2) contains a product chamber (7) for receiving the foodstuff for its cooling and a separation chamber (28), wherein the vacuum pump is connected to the separation chamber (28) and the vapor extracted by the vacuum pump is conducted from the vacuum chamber in a steam condenser (4), in which the steam in the product chamber (7) is cooled and condensed, wherein the steam condenser contains a coolant in a trough (11), and a steam introduction element (8, 9), such that the steam is introduced into the coolant, wherein fresh air is fed into the vacuum chamber (2) for aeration of the vacuum chamber (2), wherein the fresh air is fed into the vacuum chamber (2) via a tube bundle, wherein the tube bundle can in particular be configured as a double tube or as a coaxial tube bundle, which can comprise a first and a second tube, wherein the coaxial tube bundle has an inner tube through which the exhaust air from the vacuum pump is introduced into the environment and an outer tube through which the fresh air can be introduced into the vacuum chamber (2), wherein in the outer tube or in one of the first or second tubes a servo valve is arranged, which is controlled in particular according to the instructions of a cooling program.

2. The method of claim 1, wherein the pressure profile is **characterized by** a pressure profile curve which comprises at least one of the following curve profiles: a continuous decrease, a sawtooth shape, a step shape or a curve of an at least partially constant pressure profile.

3. The method of claim 1 or 2, wherein the pressure profile is pulsating, so that the pressure drops instantly in a first period in a similar manner as immediately after the opening of a shut-off element and remains constant during a second period, in a similar manner as immediately after closing of the shut-off element.

4. The method of one of the preceding claims, wherein the adaptation element comprises a frequency converter.

5. The method of claim 4, wherein the rotational velocity is proportional to the pressure in the vacuum chamber (2).

6. The method of one of the preceding claims, wherein a vacuum line is arranged between the vacuum chamber (2) and the vacuum pump which contains a shut-off element which can interrupt the connection between the vacuum chamber (2) and vacuum line, especially in emergencies or for inspection work.

7. The method of one of the preceding claims, wherein the vacuum pump is only in operation during the cooling period.

8. The method of one of the preceding claims, wherein the vacuum chamber (2) is ventilated via a servo valve by a regulated ventilation.

9. The method of one of the preceding claims, wherein a cooling program can be used for any type of foodstuff.

## Revendications

1. Procédé de régulation d'un dispositif de refroidissement sous vide (1) pour refroidir un aliment, en particulier des produits de boulangerie chauds, le dispositif de refroidissement sous vide (1) contenant une chambre à vide (2) pour recevoir les aliments, la chambre à vide (2) étant chargée avec des aliments à refroidir, en ce qu'un programme de refroidissement est attribué à l'aliment, en ce que la chambre à vide (2) est fermée, en ce qu'une pompe à vide est mise en service pour évacuer la chambre à vide (2), la pression dans la chambre à vide (2) étant enregistrée avec un appareil de mesure de pression ou une mesure de température est prévue dans la chambre à vide (2) et la pression est contrôlée à base de la mesure de température, en ce que le dispositif de mesure de pression convertit la pression en un signal de mesure de pression, le signal de mesure de pression étant fourni à une unité de commande, l'unité de commande contenant un élément de mémoire, l'élément de mémoire contenant le programme de refroidissement pour chaque aliment à refroidir, le programme de refroidissement contenant un profil de pression cible, en ce que le profil de pression cible correspondant au profil de pression souhaité correspond au refroidissement sous vide de l'aliment à refroidir pendant la période de refroidissement, dans lequel au moins un instant dans la période de refroidissement, le signal de mesure de pression est comparé à la pression de consigne à ce moment, **caractérisé en ce qu'** une vitesse de consigne de la pompe à vide est affectée à la pression de consigne, la pompe à vide étant équipée d'un dispositif de mesure de vitesse pour mesurer la vitesse de la pompe à vide, dans lequel auquel au moins un instant la vitesse de la pompe à vide est comparée à la vitesse cible et un élément d'adaptation est prévu afin d'adapter la vitesse à la vitesse cible, **en ce que** les programmes de refroidissement enregistrés pour un produit spécifique à différentes pressions ambiantes, c'est-à-dire à des conditions météorologiques différentes, sont comparés dans l'unité de commande, **en ce que** ce programme de refroidissement peut être utilisé lorsque la pression ambiante correspond à la pression ambiante mesurée, par exemple, dans une tolérance de +/- 10 mbar par rapport au programme de refroidissement, sinon, un autre programme de refroidissement peut être sélectionné ou entre les deux programmes de refroidissement les plus proches de la pression ambiante peuvent être interpolés, **en ce que** la chambre à vide (2) contient une chambre de produit (7) pour recevoir l'aliment pour son refroidissement et une chambre de séparation (28), **en ce que** la pompe à vide est reliée à la chambre de séparation (28) et la vapeur extraite par la pompe à vide est envoyée de la chambre à vide dans un condenseur de vapeur (4), dans lequel la vapeur dans la chambre de produit (7) est refroidie et condensée, le condenseur de vapeur contenant un réfrigérant dans une auge (11) et un élément d'introduction de vapeur (8, 9), par lequel la vapeur est introduite dans le réfrigérant, **en ce que** de l'air frais est introduit de la chambre à vide (2) dans la chambre à vide (2), l'air frais étant introduit dans la chambre à vide (2) via un faisceau de tubes, le faisceau de tubes pouvant notamment être conçu comme un double tube ou comme un faisceau de tubes coaxiaux, qui peut comprendre un premier et un second tube, dans lequel le faisceau de tubes coaxiaux est constitué d'un tube interne à travers lequel l'air d'échappement de la pompe à vide est introduit dans l'environnement et un tube externe à travers lequel l'air frais peut être introduit dans la chambre à vide (2), **en ce qu'**une valve proportionnelle est agencée dans le tube externe ou dans l'un des premier ou second tubes, qui est commandée en particulier selon les instructions d'un programme de refroidissement.

2. Procédé selon la revendication 1, dans lequel le profil de pression est **caractérisé par** une courbe de profil de pression qui comprend au moins l'un des profils de courbe suivants : une décroissance continue, une forme en dents de scie, une forme en gradins ou une courbe de profil de pression au moins partiellement constante.

3. Procédé selon la revendication 1 ou 2, dans lequel la courbe de pression est pulsante, de sorte que la pression chute subitement dans une première période de la même manière qu'immédiatement après l'ouverture d'un élément obturateur et reste constante pendant une seconde période, de manière similaire à celle immédiatement après la fermeture de l'élément obturateur.

4. Procédé selon l'une quelconque des revendications précédentes, dans lequel l'élément d'adaptation comprend un convertisseur de fréquence.

5. Procédé selon la revendication 4, dans lequel la vitesse est proportionnelle à la pression dans la chambre à vide (2).

6. Procédé selon l'une quelconque des revendications précédentes, dans lequel une conduite de vide est disposée entre la chambre à vide (2) et la pompe à vide qui contient un élément obturateur pouvant interrompre la connexion entre la chambre à vide (2) et la conduite de vide, notamment en cas d'urgence ou pour des travaux d'inspection.

7. Procédé selon l'une quelconque des revendications précédentes, dans lequel la pompe à vide n'est en fonctionnement que pendant la période de refroidissement.

8. Procédé selon l'une quelconque des revendications précédentes, dans lequel la chambre à vide (2) est ventilée via une valve proportionnelle par ventilation régulée.

9. Procédé selon l'une quelconque des revendications précédentes, dans lequel un programme de refroidissement peut être utilisé pour n'importe quel aliment.
